# EUROPÄISCHE PATENTSCHRIFT

(11) **EP 0 528 107 B1**
(45) Veröffentlichungstag und Bekanntmachung des Hinweises auf die Patenterteilung: **28.12.1994**
(21) Anmeldenummer: 92106201.4
(22) Anmeldetag: 10.04.1992
(51) Int. Cl.: B01F 15/02, B29C 47/50

(54) **Schneckenextruder mit Austragspumpe**
Screw-type extruding machine with discharge pump
Extrudeuse à vis avec pompe de déversement

(30) Priorität: 09.08.1991 DE 4126390
(43) Veröffentlichungstag der Anmeldung: 24.02.1993
(73) Patentinhaber: Werner & Pfleiderer GmbH, 70469 Stuttgart (DE)
(72) Erfinder: Boden, Hellmut, Dipl.-Ing. (FH), W-7132 Illingen (DE)

(56) Entgegenhaltungen:
- FR-A- 1 150 253
- FR-A- 1 160 385
- US-A- 1 516 968
- US-A- 1 595 470
- US-A- 2 692 405
- PATENT ABSTRACTS OF JAPAN vol. 11, no. 71 (M-567)(2518) 4. März 1987

## Beschreibung

Die Erfindung betrifft einen Schneckenextruder, der mit einer separat antreibbaren Zahnradpumpe als Austragsorgan ausgerüstet ist. Der Einsatz von separat antreibbaren Zahnradpumpen zum Fordern eines Mediums aus einer Misch- und Aufbereitungsvorrichtung ist bekannt (z.B. DE 37 14 243 A1, DE 38 42 988 A1, DE 39 17 523 C2).

Bei derartigen Zahnradpumpen wird das zu fördernde Medium zentral über einen Anschlussstutzen in den Spalt (Saugseite) zwischen die beiden drehenden Zahnräder eingespeist. Über die nach aussen drehenden Zahnräder gelangt das Fördermedium auf die Druckseite, wo es durch die ineinandergreifenden Zähne ausgekämmt und über einen Austrag ausgetragen wird.

Bei der Herstellung von hochviskosen, scherempfindlichen Polymeren mittels Schneckenextruder ist der Einsatz einer Zahnradpumpe als Austragsorgan üblich. Einzelheiten hierzu über Druckaufbau, Steuerung und Regelung der unabhängigen Antriebe sind z.B. in der DE 38 33 777 C2 dargelegt. Die Zahnradpumpe ist dabei mit ihrem radialen Anschlussstutzen über einen Kanal am ausstossseitigen Ende des Einwellenextruders angeflanscht. Auch bei allen anderen bekannten Einsatzzwecken als Austragspumpe steht die Saugseite der Zahnradpumpe über einen mehr oder weniger langen Kanal (z.B. FR-A 1 160 385; US-A 1 595 470, US-A 1 516 968) mit dem Aufbereitungsextruder in Wirkungsverbindung und werden mit der gleichen Drehzahl des Einwellenextruders angetrieben.

Nachteilig bei diesen bekannten Anordnungen ist, dass sich in dem Kanal zwischen Aufbereitungsvorrichtung und Zahnradpumpe Ablagerungen festsetzen können. Dies tritt besonders bei Stillstandszeiten und bei Materialwechsel auf. Der dabei anfallende Reinigungsaufwand ist mit erheblichen Zeitaufwendungen verbunden.
Ferner ist es aus der US-A 2 692 405 bekannt über ein Zwischenstück eine Zahnradpumpe stirnseitig an dem Austrag eines Einwellen-Extruders anzuflanschen. Auch bei dieser Lösung ist ein langer Kanal (am Zwischenstück und am Austrag des Extruders) vorhanden, der die o.g. Nachteile aufweist. Zur Überwindung von hohen Drücken beim Extrudieren plastischer Massen ist es aus der GB PS 1 170 728 bekannt, auf den verlängerten Wellen der Zahnräder einer Zahnradpumpe beidseitig Förderschnecken anzuordnen, welche von aussen nach innen fördern. Neben den hierbei erheblichen Aufwendungen für die Abdichtung dieser drei Arbeitsräume, besteht der wesentliche Nachteil dieser Einrichtung darin, dass die Förderschnecken und die Zahnradpumpe immer mit der gleichen Drehzahl betrieben werden müssen und somit in der Praxis kaum bzw. nur für sehr wenige Materialien einsetzbar sind.

Aufgabe der Erfindung ist es, eine Vorrichtung nach dem Oberbegriff des Patentanspruches 1 derart auszubilden, dass keine Materialablagerungen zwischen Aufbereitungsvorrichtung und Austragspumpe entstehen können.

Die Aufgabe wird mit den Merkmalen des Patentanspruches 1 gelöst.

Mit den Merkmalen des Anspruches 1 liegen besonders günstige Voraussetzungen für die Herstellung von hochviskosen, scherempfindlichen Polymeren vor. Hierbei kann ein schonendes Aufschmelzen des Polymers im Extruder erfolgen, wobei die Polymerschmelze totraumfrei direkt in den Saugraum der angeflanschten Zahnradpumpe eingespeist wird, die den erforderlichen Druckaufbau für die nachgeschaltete Weiterbearbeitungseinrichtung bewirkt. Da beide Einrichtungen, Gleichdrall- Doppelschneckenextruder und die Zahnradpumpe eine selbstreinigende Wirkung besitzen, ist auf Grund der erfindungsgemässen totraumfreien Einspeisung der Schmelze in die Förderpumpe eine schnelle Umstellung bei Material-oder Farbwechsel sichergestellt.
Es können bei Stillstandzeiten oder Materialwechsel keine Ablagerungen mehr zwischen der Misch- und Aufbereitungsvorrichtung und der Austragspumpe entstehen.

In Weiterbildung der Erfindung nach den Merkmalen des Anspruches 2 kann die Verweilzeit in den Schneckenextruder sowie der dosierte Austrag des Fördermediums in eine Nachfolgeeinrichtung beliebig variiert werden.
Durch eine weitere Ausgestaltung nach Anspruch 3 kann eine die Förderung vorteilhaft beeinflussende Temperatur eingestellt werden.

Mit den Merkmalen des Anspruches 4 ist eine vorteilhafte Übergabe von der Zahnradpumpe zur Nachfolgeeinrichtung ermöglicht.

Ein Ausführungsbeispiel der Erfindung ist in der Zeichnung dargestellt und nachstehend erläutert.

Es zeigen:
- Fig. 1: eine schematische Darstellung eines Schneckenextruders mit integrierter Zahnradpumpe
- Fig. 2: eine vergrösserte Darstellung der Anflanschstelle der Zahnradpumpe am Extruder gem. Fig. 1

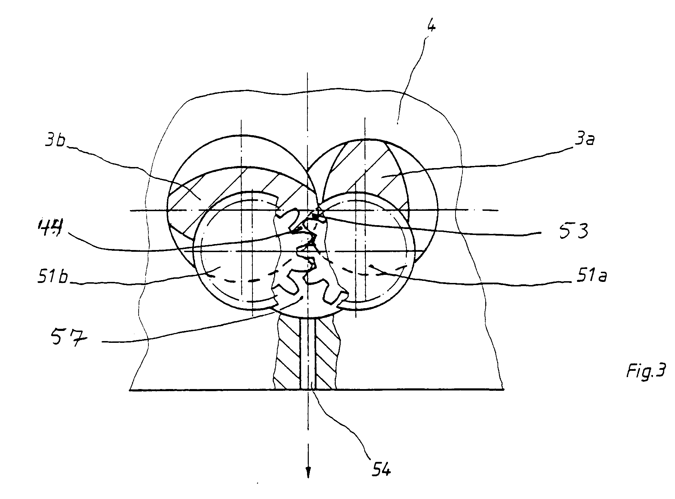

- Fig. 3: einen Schnitt gemäss Fig. 1 entlang der Linie I-I teilweise aufgeschnitten dargestellt

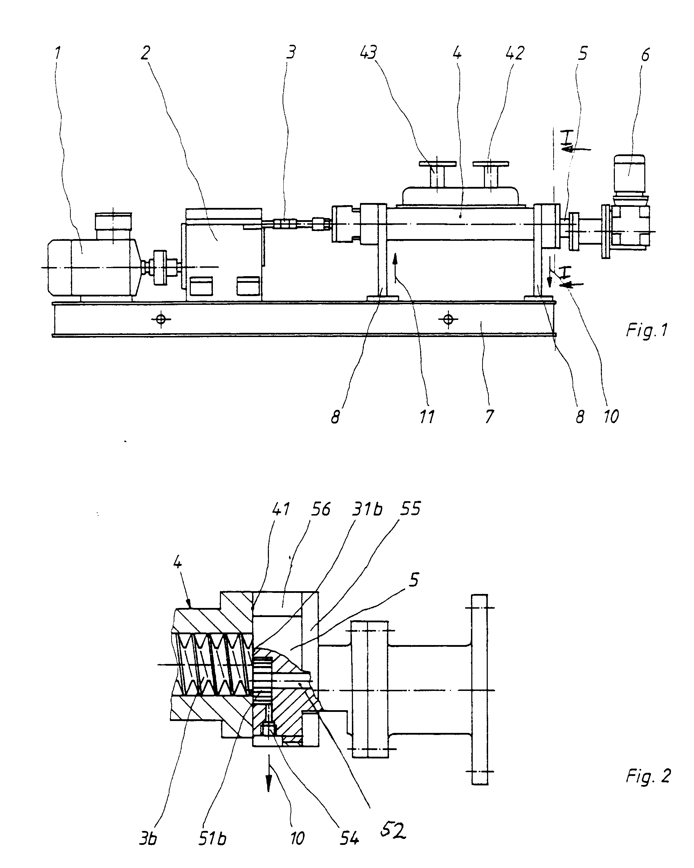

In Fig. 1 ist die Erfindung an Hand eines Schneckenextruders schematisch dargestellt. Auf einem Grundrahmen 7 sind der Antriebsmotor 1, Getriebe 2 sowie über Ständer 8 der Schneckenextruder 4 angeordnet. Am Austragsende des Schneckenextruders ist eine Zahnradpumpe 5 stirnseitig direkt am Gehäuseende 41 des Extruders druckdicht angeflanscht.
Die Zahnradpumpe 5 weist einen eigenen Antriebsmotor 6 auf. Auf der vom Antriebsmotor 6 gegenüberliegenden Stirnseite sind die Wellen 52 der Zahnradpumpe 5 fliegend gelagert und weisen gegenüber den Schneckenwellenenden 31 nur ein geringes, für die Bewegung erforderliches Spiel auf. Mit dem Pfeil 11 ist die Materialzuführung für den Extruder und mit dem Pfeil 10 der radiale Austrag aus der Zahnradpumpe 5 angedeutet. Mit 3 sind die Verbindungswellen zwischen Getriebe 2 und Schneckenwellen 3a und 3b des Gleichdrall-Doppelschneckenextruders bezeichnet.
Über die Stutzen 42 und 43 kann eine Entgasung des Schneckenextruders 4 bzw. eine zusätzliche Materialzuführung erfolgen. Wie aus Fig. 2 entnehmbar ist, bildet das stirnseitige Gehäuseende 41 des Schneckenextruders 4 und die Schneckenwellenenden 31a und 31b gleichzeitig den dichten stirnseitigen Gehäuseabschluss für die dort direkt ohne Totraum angeflanschte Zahnradpumpe 5. Die Zahnradpumpe 5 ist dabei gegenüber den Schneckenwellen 31a und 31b so nach unten versetzt, dass der untere Zwickelbereich 44 des Doppelschneckenextruders 4 mit dem Saugraum 53 der Zahnradpumpe 5 für die Einspeisung der Schmelze in Verbindung steht. Der Versatz der Zahnradpumpe 5 ist dabei mindestens so gross, dass ein Viertel des Durchmessers der Zahnräder 51a, 51b druckdicht von einem Druckraum 57 umgeben ist. Vom Druckraum 57 geht ein radialer Austrag 54 ab, über dem die Schmelze in eine geeignete Nachfolgeeinrichtung gedrückt wird.Der obere Bereich des Schneckenextruders 4 sowie der obere Zwickel ist dabei durch das Gehäuse der Zahnradpumpe 5 abgedichtet. Die Befestigung der Zahnradpumpe 5 erfolgt dabei über eine Druckplatte 55 und Distanzelement 56 über nicht dargestellte Schrauben an der Stirnseite 41 des Extruders 4.

In der Zeichnung sind, den Erfindungsgegenstand selbst nicht beeinflussende Details, wie z.B. die Beheizung des Extruders und der Zahnradpumpe sowie die Regelung und Steuerung der voneinander unabhängigen Antriebe nicht näher dargestellt. Diese Merkmale gehören zum bekannten Stand der Technik und sind vom Fachmann an Hand der Eigenschaften des aufzubereitenden Polymers leicht auszuwählen und an der Anlage einstellbar.
Das Wesen der Erfindung besteht in der totraumfreien Übergabe der Polymerschmelze aus dem Schneckenextruder 4 in die Zahnradpumpe 5. Dadurch entfallen jegliche Reinigungsarbeiten nach Stillstandszeiten oder Materialwechsel, da der Extruder und die Zahnradpumpe selbstreinigend sind und keine Verbindungskanäle zwischen bei den Einrichtungen mehr vorhanden sind.

## Patentansprüche

1. Schneckenextruder zur Aufbereitung von Materialien, insbesondere von Polymere, wobei am Austrag eine separat antreibbare Zahnradpumpe zum Fördern des aufbereiteten Mediums angeordnet ist, dadurch gekennzeichnet, dass ein waagerecht angeordneter Gleichdrall-Doppelschneckenextruder (4) eingesetzt ist, an dessem stirnseitigen Austragsende (41) die Zahnradpumpe (5), die an einer Stirnseite fliegend gelagert ist, an dieser Stirnseite druckdicht so angeflanscht ist, dass zwischen den Stirnflächen der Zahnräder (51) und den Schneckenwellenenden (31) nur ein geringes erforderliches Bewegungsspiel verbleibt, wobei die Zahnradpumpe (5) soweit nach unten gegenüber den Schneckenwellen (3) versetzt ist, dass der untere Zwickelbereich (44) des Doppelschneckenextruders (4) mit dem Saugraum (53) der Zahnradpumpe (5) zur Einspeisung der Polymerschmelze in Wirkungsverbindung steht.

2. Schneckenextruder nach Anspruch 1, dadurch gekennzeichnet, dass der Antrieb der Zahnradpumpe (5) und des Gleichdrall-Doppelschneckenextruders (4) unabhängig voneinander regelbar sind.

3. Schneckenextruder nach Anspruch 1, dadurch gekennzeichnet, dass das Gehäuse der Zahnradpumpe (5) unabhängig vom Gehäuse des Gleichdrall-Doppelschneckenextruders (4) temperierbar ausgebildet ist.

4. Schneckenextruder nach einem der Ansprüche 1-3, dadurch gekennzeichnet, dass der Austrag (54) der Zahnradpumpe (5) vom Druckraum (57) aus radial nach unten angeordnet ist.

## Claims

1. Worm extruder for the preparation of materials, in particular of polymers, wherein a separately drivable gearwheel pump for the conveying of the prepared medium is arranged at the discharge, characterised thereby, that an horizontally arranged equal pitch double worm extruder (4) is used, at the end face discharge end (41) of which the gearwheel pump (5), which is borne overhung at one end face, is so flanged on at this end face in pressure-tight manner that only a small necessary motional play remains between the end faces of the gearwheels (51) and the worm shaft ends (31), wherein the gearwheel pump (5) is displaced so far downwardly relative to the worm shafts (3) that the lower spandrel region (44) of the double worm extruder (4) stands in effective connection with the suction chamber (53) of the gearwheel pump (5) for the feeding-in of the polymer melt.

2. Worm extruder according to claim 1, characterised thereby, that the drive of the gearwheel pump (5) and of the equal pitch double worm extruder (4) are each variable independently of the other.

3. Worm extruder according to claim 1, characterised thereby, that the housing of the gearwheel pump (5) is constructed to be temperable independently of the housing of the equal pitch double worm extruder (4).

4. Worm extruder according to one of the claims 1 to 3, characterised thereby, that the discharge (54) of the gearwheel pump (5) from the pressure chamber (57) is arranged to be radially downward.

## Revendications

1. Extrudeuse à vis destinée à la préparation de matières premières et notamment de polymères, à la sortie de laquelle est disposée une pompe à engrenages commandée séparément et destinée à extraire la matière traitée, extrudeuse caractérisée en ce que la machine utilisée est une extrudeuse (4) horizontale à deux vis de même pas, sur la face de sortie (41) de laquelle la pompe (5) à engrenages, qui est montée flottante d'un coté, est fixe hermétiquement de manière qu'entre les flancs (31) des roues dentées (51) et l'extrémité (31) des arbres des vis, il ne subsiste que le faible jeu nécessaire pour permettre le mouvement, la pompe (5) à engrenages étant décalée vers le bas par rapport à ces arbres (3) des vis suffisamment pour que le secteur inférieur (44) de l'extrudeuse (4) à deux vis de même pas soit en communication avec la chambre d'aspiration (53) de la pompe (5) à engrenages pour y délivrer le polymère fondu.

2. Extrudeuse à vis selon la revendication 1, caractérisée en ce que les dispositifs d'entraînement de la pompe (5) à engrenages et de l'extrudeuse (4) à deux vis de même pas sont réglables indépendamment l'un de l'autre.

3. Extrudeuse à vis selon la revendication 1, caractérisée en ce que le corps de la pompe (5) à engrenages peut être tempéré indépendamment de celui de l'extrudeuse (4) à deux vis de même pas.

4. Extrudeuse à vis selon l'une des revendications 1 à 3, caractérisée en ce que le passage de sortie (54) de la chambre de refoulement (57) de la pompe (5) à engrenages est orienté radialement vers le bas.
